# EUROPEAN PATENT APPLICATION

(11) **EP 4 841 343 A1**
(43) Date of publication of application: **18.11.2026**
(21) Application number: 26172578.2
(22) Date of filing: 15.04.2026
(51) Int. Cl.: G03B 15/03, F21V 31/00, F21V 33/00, F21W 107/20

(54) **UNDERWATER LIGHT WITH CAMERA**

(30) Priority: 08.05.2025 GB 202507021
(71) Applicant: Ocean Led Marine Ltd, Hinckley, Leicestershire LE10 3BS (GB)
(72) Inventor: ROBERTSON, Toby, Leicester, LE10 3BS (GB); TODARO, Daniele, Leicester, LE10 3BS (GB); HARRIS, Jordan, Leicester, LE10 3BS (GB)
(74) Representative: Serjeants LLP

(57) **Abstract**

An underwater light having an array of light emitting diodes and a camera. The light comprises a housing, the array of light-emitting diodes that are contained, one or more optical elements associated with the light-emitting diodes; and a camera having a lens with an optical input. The light-emitting diodes, the optical elements, and the camera are all contained within the housing. A transparent screen may also be provided at a front side of the housing. The underwater light is constructed such that the array of light-emitting diodes and the one or more optical elements are arranged to have a planar optical output; and the camera is mounted amongst the array of light-emitting diodes such that the optical input is at, or behind, the planar optical output. This enables the camera to work properly without glare from the light emitting diodes affecting the camera image.

## Description

### Field of the Invention

The present invention relates to underwater lighting. In particular, the present invention relates to underwater lighting units that are mounted on or through the hulls of marine vessels.

### Background to the Invention

Many marine vessels, including boats, ships, and yachts, are provided with underwater exterior lighting in their hull. This lighting acts to illuminate the water around the vessel and can provide a pleasing aesthetic appearance. Underwater lighting can also be useful for pleasure fishing vessels.

Very small underwater lights can be entirely external to a hull and fixed thereto. Slightly larger lights are often mounted through the hull, without a cofferdam. In particular, such underwater lights have shafts that extend through an aperture formed in the hull and a mounting portion formed at an outer end of the shaft for mounting to the hull, thereby sealing the aperture. One or more lights are generally mounted at or near the outer end of the shaft for projecting light outwards from the hull.

Some marine vessels are also provided with underwater cameras mounted on, or through the hull to look outwards from the vessel. These cameras are often provided in addition to the underwater lights. Underwater cameras may be provided for a variety of reasons. These include, but are not limited to, viewing marine life, for fishing to provide underwater views of a catch, monitoring mechanical components such as propellers and rudders, and security for monitoring divers etc. Underwater cameras are often provided in conjunction with underwater lights so that the water being viewed by the camera is illuminated, although in such situations the underwater camera is capable of use with and without illumination from the lights.

Generally, when underwater cameras and underwater lights are provided together they are separated by significant distances and carefully positioned to avoid light from the underwater lights causing glaring issues with the camera. If positioned incorrectly underwater cameras can become essentially useless when associated underwater lights are illuminated because glare from the underwater lights will prevent the camera being able to detect light from other sources.

### Summary of the Invention

The present invention provides an underwater light comprising;
a housing;
an array of light-emitting diodes contained within the housing;
one or more optical elements associated with the light-emitting diodes; and
a camera having a lens with an optical input; wherein:
   the array of light-emitting diodes and the one or more optical elements are arranged to have a planar optical output; and
   the camera is mounted amongst the array of light-emitting diodes such that the optical input is at, or behind, the planar optical output.

The present invention is advantageous in that it provides a combined underwater light and underwater camera wherein the underwater camera can be operated whilst the underwater light is illuminated. This is achieved by having the array of light-emitting diodes having a planar optical output and positioning the camera at or behind the planar optical output. Having the underwater camera positioned at or behind the planar optical output prevents glare from the array of light-emitting diodes entering the camera during operation.

The planar optical output of the array of light-emitting diodes is a plane at which substantially all light emitted from the light-emitting diodes is emitted out of the light forward from, with no uncontained light emitted backwards of this plane. Light can be emitted in any direction forward of this plane but no light is uncontained emitted backwards from it. This can be achieved in a variety of ways that will be immediately apparent to the person skilled in the art. For example, this can be achieved by appropriate positioning of the light-emitting diodes. Additionally or alternatively, this can be achieved through the use of cooperatively positioned optical elements such as collimators and/or lenses, as described below. Individual light-emitting diodes may be positioned backwards from the planar optical output but in such cases light emitted from said light-emitting diodes must be contained within an optical element such as a collimator, lens, or reflector up to the planar optical output.

Embodiments of the present invention may further comprising a transparent front screen. A transparent screen may be provided to form a front wall of the housing with an internal side that enclosed the components of the underwater light, including the array of light-emitting diodes and the camera and allowing them to be seen from a front side. In alternative embodiments there may be more than one transparent portion of a front side of the underwater light, each associated with one or more light-emitting diodes and/or the camera. In further alternative embodiments one or more optical elements of the underwater light may form all or part of a front wall of the housing underwater light. If a transparent front screen is provided it may be separate from, or integral with, optical elements provided for the array of light-emitting diodes. For example, a transparent front screen may be formed separately from, or integrally with, reflectors, lenses or collimators provided in front of the array of light-emitting diodes.

If a transparent screen is provided, an internal side of the transparent front screen is coincident with the planar optical output. Alternatively, a transparent front screen may be provided a small distance (less than 5mm, preferably less than 3mm, preferably less than 1mm) ahead of the planar optical output. Having the transparent front screen coincident with the planar optical output is advantageous as it minimizes reflections and distortions from the array of light-emitting diodes and can thereby allow the camera to operate optimally.

Generally, if a transparent screen is provided it is advantageous that a light input of the underwater camera is positioned immediately adjacent the internal side of the transparent screen. However, in embodiments the transparent screen may be provided a small distance (less than 5mm, preferably less than 3mm, preferably less than 1mm) ahead of the light input of the camera. The light input may be a lens. Alternatively, in embodiments of the invention the transparent screen may comprise or form a lens for the camera. Alternatively, in further embodiments the camera may not have a lens.

If a transparent screen is provided in the manner set out above, one or more of the array of light-emitting diodes may positioned away from the internal side of the transparent screen and an associated optical element is provided for each light emitting diode that directs light to the internal side of the transparent front screen. That is, an optical element may be provided for one or more of the array of light-emitting diodes and the optical element may be positioned between a transparent screen and the or each light-emitting diodes. Suitable optical elements for this construction include, but are not limited to, reflectors, a lenses, or a collimators. In embodiments of the invention one or more of the optical elements may be integrated into the transparent screen and formed contiguously with the transparent screen.

Advantageously, the camera of the underwater light is positioned as far away from the array of light-emitting diodes as is practical. Additionally, it is advantageous that the camera is positioned as far away from any light-emitting diode driver switcher circuits. This is because it is advantageous to position the camera as far as possible away form heat sources within the underwater light (these will generally be the array of light-emitting diodes) and away from sources of electromagnetic interference. This may be achieved by positioning the camera at least 5mm, preferably at least 10mm away from the nearest light emitting diode(s) and at least the same distance away from the nearest source of electromagnetic interference. The distance from the closest light emitting diode and/or the nearest source of electromagnetic interference may be measured from an axial centre of the underwater camera.

The housing of an underwater light according to the present invention may be formed of any suitable material. It may be advantageous that the housing is formed partially or entirely of metal. Appropriate metals can also be strong and can also resist corrosion from water, including sea water. Metal is advantageous as it provides better transfer of heat from the array of light-emitting diodes to surrounding water and to the marine vessel in which it is located. As the underwater light is intended for use in direct contact with water it may not be necessary to provide a heat sink. However, in embodiments of the invention an additional heat sink may be provided. The housing may also be formed partially or entirely from appropriate plastic.

In embodiments of the invention the array of light emitting diodes and the underwater camera may be mounted on the same circuit board. This is advantageous as it provides a simple construction that allows for a single power supply to be provided in a simple manner. Alternatively, in embodiments of the invention the array of light emitting diodes and the underwater camera may be provided on two or more separate circuit boards. The camera may be provided on a separate circuit board from the light emitting diodes. The camera may be separate from any circuit boards. The array of light emitting diodes may be provided on one or more circuit boards.

In embodiments of the invention the housing has a rear face and cabling for the array of light-emitting diodes and the enters the housing through an aperture formed in the rear face. It is advantageous that there is a single cabling supplied to the housing via a single aperture. This is preferred as it provides a simple and robust construction for the underwater light with less opportunity for water ingress into the light. However, in embodiments of the invention there may be two or more cables supplied to the light, for example the camera and the array of light-emitting diodes may be supplied separately or there may be separate control and power cables. In embodiments of the invention the underwater light may comprise a single supply cable that controls and powers the array of light-emitting diodes and the underwater camera.

The camera of the present invention may be any suitable camera. For example, the camera may be a micro-miniature type camera with composite video output. The specifications of one example of a suitable camera is as follows:

| | |
|---|---|
| Sensor | CMOS5006 |
| Resolution | 720*480 |
| Horizontal Resolution | 800TVL |
| Minimum illumination | 0.008LUX |
| S/N ratio | ≥48dB |
| Gamma | 0.45 |
| Frame rate | 50 fps (PAL), 60 fps (NTSC) |
| White balance | Auto |
| Audio out | None |
| Video out | 1.2Vp-p 75Ω CVBS |
| TV format | PAL/NTSC |
| Lens | 3.6mm 65° |
| Image Colour | Colour/BW |
| Working temperature | -10~+50°C |
| Power consumption | 80mA |
| Input voltage | 5-12V |
| Size | 6*6mm |

It is anticipated that the skilled person will be able to determine suitable light-emitting diodes for use in the underwater light of the present invention. Any light-emitting diode currently used in an underwater light may be suitable for use in an underwater light according to the present invention.

Further features and advantages of the present invention will be apparent from the embodiments shown in the Figures and described below. Unless otherwise stated in the claims or in the description below, any feature of the embodiment described below may be included in an embodiment of the invention independently from any other feature.

### Drawings

Figure 1 is a front view of a first embodiment of an underwater light according to the present invention;
Figure 2 is a side cross-section of the first embodiment of the underwater light according to the present invention;
Figure 3 is a front view of a second embodiment of an underwater light according to the present invention; and
Figure 4 is a side cross-section of the second embodiment of the underwater light according to the present invention;

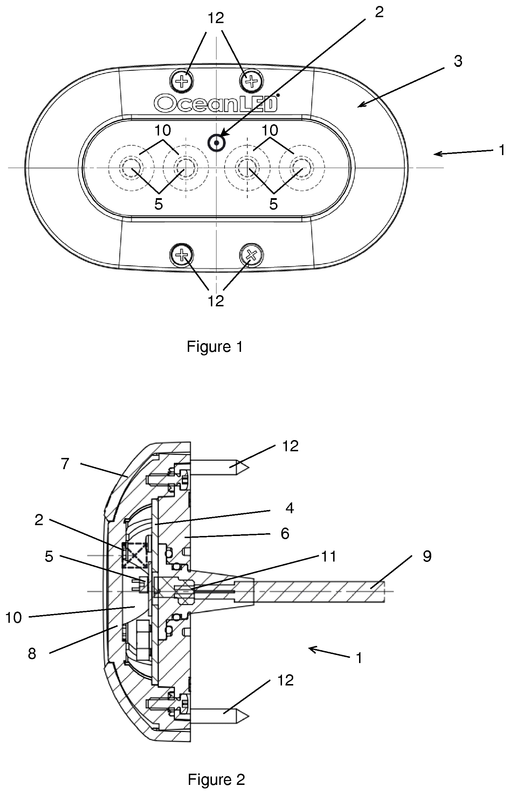

A first embodiment of an underwater light 1 having a camera 2 is shown in Figures 1 and 2. The light 1 comprises a housing 3 containing a circuit board 4 on which an array of light-emitting diodes 5 are mounted. The camera 2 is also mounted on the same circuit board 4. The housing consists of a back plate 6 and a front housing 7. A transparent front screen 8 is provided at an outer side of the housing 3 and is positioned to have an outer face facing outwards and an internal face. A supply cable 9 is provided at a rear of the underwater light 1. The cable 9 contains power and control cables for the light-emitting diodes 5 and the camera 2. A waterproof seal 11 is provided between the cable 9 and the housing 3.

The light emitting diodes 5 are each provided with a collimating lens 10 positioned between the circuit board 4 and the internal face of the transparent front screen 8 such that all light emitted from each of the light emitting diodes 5 is contained within the collimating lens 10 up to the internal face of the transparent front screen. In this way the internal face of the transparent front screen 8 forms a planar optical output wherein no light from the light emitting diodes 5 enters the housing 3 rearwards of the internal face of the transparent front screen 8; all light being emitted forwards of this planar optical output.

The camera 2 is positioned such that its lens is immediately adjacent the internal face of the transparent front screen 8, behind the planar optical output such that glare from the light-emitting diodes 5 cannot enter the lens and the camera can operate properly, even when the light-emitting diodes 5 are operating. The camera 2 is positioned centrally within the underwater light 1 and equidistant and slightly offset from the two adjacent light-emitting diodes. The camera 2 is approximately 11mm from the two adjacent light -emitting diodes, which is a far as its practically possible within this underwater light 1. The camera 2 is also positioned away from light-emitting diode driver switcher circuits (not shown) positioned on the circuit board 4. In this manner the camera 2 is positioned away from the heat sources within the underwater light 1 (the light-emitting diodes) and away from the localized sources of electromagnetic interference (the driver switch circuits). The lens of the camera 2 being positioned immediately adjacent the internal face of the transparent front screen 8 also acts to minimize image distortion or blur from the transparent front screen 8.

The underwater light 3 is mounted to an external side of a hull of a marine vessel (not shown) via four bolts 12. A central hole is provided in the hull, through which the cable 9 is positioned. The central hole is provided with a seal such that water cannot enter the hull.

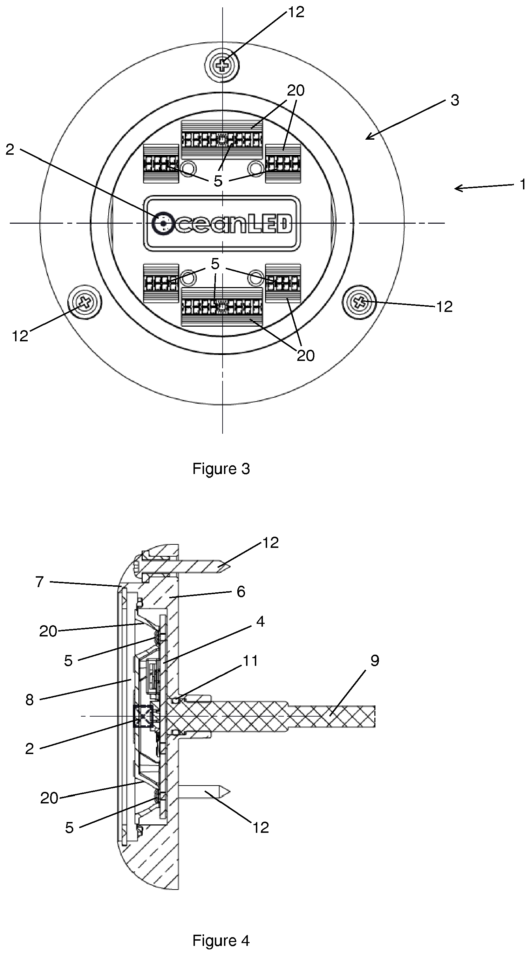

A second embodiment of an underwater light 1 according to the present invention is shown in Figures 3 and 4. The components and features of the second embodiment are generally equivalent to the first embodiment. Therefore, the same reference numerals have been used to indicate the equivalent features of the second embodiment where appropriate.

The light 1 comprises a housing 3 containing a circuit board 4 on which an array of light-emitting diodes 5 are mounted. The camera 2 is also mounted on the same circuit board 4. The housing consists of a back plate 6 and a front housing 7. A transparent front screen 8 is provided at an outer side of the housing 3 and is positioned to have an outer face facing outwards and an internal face. A supply cable 9 is provided at a rear of the underwater light 1. The cable 9 contains power and control cables for the light-emitting diodes 5 and the camera 2. A waterproof seal 11 is provided between the cable 9 and the housing 3.

The light emitting diodes 5 are provided with a reflector 20 positioned between the circuit board 4 and the internal face of the transparent front screen 8 such that all light emitted from each of the light emitting diodes 5 is contained within the reflector 20 up to the internal face of the transparent front screen. In this way the internal face of the transparent front screen 8 forms a planar optical output wherein no light from the light emitting diodes 5 enters the housing 3 rearwards of the internal face of the transparent front screen 8; all light being emitted forwards of this planar optical output.

The camera 2 is positioned such that its lens is immediately adjacent the internal face of the transparent front screen 8, behind the planar optical output such that glare from the light-emitting diodes 5 cannot enter the lens and the camera can operate properly, even when the light-emitting diodes 5 are operating. The camera 2 is positioned offset from the centre of underwater light 1 and equidistant from the two adjacent rows of light-emitting diodes. The camera 2 is approximately 11mm from the two adjacent light -emitting diodes, which is a far as its practically possible within this underwater light 1. The camera 2 is also positioned away from light-emitting diode driver switcher circuits (not shown) positioned on the circuit board 4. In this manner the camera 2 is positioned away from the heat sources within the underwater light 1 (the light-emitting diodes) and away from the localized sources of electromagnetic interference (the driver switch circuits). The lens of the camera 2 being positioned immediately adjacent the internal face of the transparent front screen 8 also acts to minimize image distortion or blur from the transparent front screen 8. The camera 2 is also positioned to form the 'O' of the manufacturer's logo to provide a pleasing aesthetic appearance.

The underwater light 3 is mounted to an external side of a hull of a marine vessel (not shown) via three bolts 12. A central hole is provided in the hull, through which the cable 9 is positioned. The central hole is provided with a seal such that water cannot enter the hull.

## Claims

1. An underwater light comprising;
a housing;
an array of light-emitting diodes contained within the housing;
one or more optical elements associated with the light-emitting diodes; and
a camera having a lens with an optical input; wherein:
the array of light-emitting diodes and the one or more optical elements are arranged to have a planar optical output; and
the camera is mounted amongst the array of light-emitting diodes such that the optical input is at, or behind, the planar optical output.

2. An underwater light according to claim 1, further comprising a transparent front screen.

3. An underwater light according to claim 2, wherein an internal side of the transparent front screen is coincident with the planar optical output.

4. An underwater light according to claim 3, wherein a light input of the underwater camera is positioned immediately adjacent the internal side of the transparent screen.

5. An underwater light according to claim 3, wherein a light input of the underwater camera is positioned away from the internal side of the transparent screen.

6. An underwater light according to any of claims 3 to 5, wherein one or more of the array of light-emitting diodes is positioned away from the internal side of the transparent screen and an associated optical element is provided for each light emitting diode that directs light to the internal side of the transparent front screen.

7. An underwater light according to claim 6, wherein each associated optical element is reflector, a lens, or a collimator.

8. An underwater light according to any preceding claim, wherein an axial centre of the underwater camera is positioned at least 10mm away from the closest of the light-emitting diodes in the array.

9. An underwater light according to any preceding claim, wherein the housing is formed of metal.

10. An underwater light according to any preceding claim, wherein each of the array of light emitting diodes and the underwater camera are mounted on the same circuit board.

11. An underwater light according to any preceding claim, wherein the housing has a rear face and cabling for the array of light-emitting diodes and the enters the housing through an aperture formed in the rear face.

12. An underwater light according to any preceding claim, further comprising a single supply cable that controls and powers the array of light-emitting diodes and the underwater camera.
